# EUROPEAN PATENT SPECIFICATION

(11) **EP 1 827 696 B1**
(45) Date of publication and mention of the grant of the patent: **30.03.2011**
(21) Application number: 05815539.1
(22) Date of filing: 13.12.2005
(51) Int. Cl.: B01L 7/00, B01D 5/00, B01D 53/00

(54) **COLLECTING DEVICE**
AUFFANGVORRICHTUNG
DISPOSITIF DE COLLECTE

(30) Priority: 22.12.2004 SE 0403112
(43) Date of publication of application: 05.09.2007
(73) Proprietor: FOSS Analytical AB, 263 21 Höganäs (SE)
(72) Inventor: PETERSSON, Tommy, S-252 84 Helsingborg (SE)
(86) International application number: PCT/SE2005/001897
(87) International publication number: WO 2006/068579

(56) References cited:
- EP-A1- 1 050 329
- WO-A1-98/45680
- GB-A- 1 451 289
- US-A- 2 210 176
- US-A- 2 868 626
- US-A- 5 114 567
- US-A- 5 398 806
- US-A- 5 417 924

## Description

### Field of the Invention

The present invention relates to a collecting device to be connected to at least one test tube, in which a sample is subjected to a wet combustion process.

### Background Art

Kjeldahl analysis is a wet chemical method for quantitative estimation of nitrogen in organic compounds. The method is frequently used for indirect estimation of the protein content of feedstuff, foods and other biological material. To estimate the amount of nitrogen in a sample and, thus, indirectly the protein content of the sample, the sample must first be preprocessed for conversion of the nitrogen in the sample into ammonium sulphate.

This is done by splitting the sample in boiling concentrated sulphuric acid with a catalyst added, for instance mercury, copper, selenium or titanium and a salt, such as potassium sulphate. The salt increases the boiling point of the sulphuric acid, which accelerates the splitting process and ensures that the sample can be split. Splitting requires a temperature of 370-400°C. Preprocessing thus requires a high temperature and occurs in a poisonous environment. This places great demands on the equipment in which preprocessing is to take place.

Preprocessing of a sample before the Kjeldahl analysis is usually performed in a fume cupboard while collecting nasty-smelling substances from the combustion. A test tube, in which the sample is preprocessed, is connected to a collecting system which separates sulphurous fumes from the acid in the boiling sample.

The collecting system is thus adapted to remove nasty-smelling and poisonous fumes from preprocessing. However, concentrated sulphuric acid is used in splitting, and it is desirable for the removal of sulphuric acid to be minimised since concentrated sulphuric acid is expensive and harmful to the environment. Consequently the combustion and the collecting system should be arranged so that the removal of undesirable fumes from preprocessing does not result in a considerable waste of sulphuric acid.

A small waste of sulphuric acid can be achieved in various ways. Boiling can be controlled so that the boiling sulphuric acid is kept at a low level in the test tube, in which case evaporated sulphuric acid from boiling can be condensed in the test tube and return to the combustion process without reaching the collecting system. This implies, however, that boiling occurs slowly and that the preprocessing of the sample takes a long time.

Alternatively, for example as disclosed in GB 1,451,289, the collecting system can have a long connecting tube that is connected to the test tube. Evaporated sulphuric acid can then be condensed in the connecting tube and thus return to the combustion process before reaching a collector of the collecting system that would draw off the sulphuric acid. This means, however, that the collecting system will be bulky.

A collecting device for a Kjeldahl analyser is disclosed in US 2,210,176 which comprises a common collector tube to which may be attached a plurality of reaction flasks or test-tubes. The collector tube is provided with a flattened side to which is attached a series of hoods which serve to receive the necks of various reaction flasks. A through hole is provided for each hood to connect the hood with the interior of the collector tube, the inner surface of which is smooth and free of protrusions or obstructions.

### Summary of the Invention

An object of the invention is to provide an improved collecting device to be connected to at least one test tube. A special object of the invention is to provide a collecting device which can be made compact and keeps reagent waste from combustion in the test tube at a low level.

These objects of the invention are achieved by a collecting device according to the independent claim. Preferred embodiments of the collecting device are defined in the dependent claims.

Thus the invention provides a collecting device to be connected to at least one test tube, in which a sample is subjected to a wet combustion process. The collecting device comprises a collector tube, which is arranged to collect and draw off from the test tube steam products from the wet combustion, and a plurality of connecting tubes, each of which has a first opening connecting the connecting tube to the collector tube and a second opening which is adapted to be inserted into a test tube. The collector tube comprises a corresponding plurality of projections, each being associated with its own one of the plurality of connecting tubes and each of which extends from a portion of an inner side wall of the collector tube, which portion is positioned opposite to a connection of the first opening of the connecting tube to the collector tube into the interior of the collector tube to have a condensing surface for condensing of reagent in the steam products.

The collecting device according to the invention enables an efficient wet combustion process in a test tube without a great waste of reagent from the combustion process. An efficient combustion process can be obtained by the boiling of a sample in the test tube being allowed to occur to a high level in the test tube. This means at the same time that the risk increases that a reagent that is evaporated in the combustion process will rise into the collector tube. As a result of the invention, the reagent can be allowed to rise towards or into the collector tube without being wasted. The reagent comes into contact with an inner projection in the collector tube which provides an extra condensing surface in addition to the walls of the connecting tube. The reagent can condense on the extra condensing surface and thus be returned to the test tube. The inner projection allows the reagent to be returned without a long connecting tube being necessary between the collector tube and the test tube, which makes the system of test tube and collecting device compact. The collector tube and the connecting tube can be arranged outside heat shields of a heating system for the test tubes, which means that the temperature in the collector tube can be kept considerably lower than in the test tube and condensing will occur when fumes from the combustion process come into contact with the condensing surface.

The projection may comprise an inner duct which has an opening communicating with the ambient atmosphere. This means that cold air from the ambient atmosphere can come into direct contact with the projection and the reagent fumes, which effectively keeps the temperature of the projection low and facilitates condensation of reagent on the condensing surface of the projection and also provides direct condensation of reagent that comes into contact with the cold air.

Evacuation of undesirable fumes through the collector tube occurs, which means that fumes from the combustion process can be prevented from entering the ambient atmosphere through the inner duct of the projection. Instead cold air can be drawn into the connecting tube through the duct.

The projection can extend from a portion of an inner side wall of the collector tube, which portion is positioned opposite to a connection of the first opening of the connecting tube to the collector tube. This means that the projection is oriented towards the connecting tube opening into the collector tube. Thus, reagent condensing on the condensing surface of the projection can fall in drops directly back into the connecting tube and further down in the test tube and thus immediately return to the combustion process.

Moreover the projection can extend at least partly into the connecting tube. This means that a condensing surface is provided inside the connecting tube. Thus a still better check is obtained that reagent condensing on the projection will really fall back into the test tube.

The connecting tube and the collector tube can be arranged relative to each other so that the first opening of the connecting tube is arranged in a position inside the collector tube. This results in a small risk of crosstalk, that is reagent evaporated in a test tube falling back into another test tube. Possibly condensed reagent that has reached the bottom of the collector tube cannot fall down into a connecting tube, since the connecting tube extends into the collector tube. In combination with the projection partly extending into the connecting tube, the risk of crosstalk is minimal.

The projection can be laterally offset in relation to the position of the first opening in the collector tube in a direction in which steam products flow in the collector tube, the collector tube being provided with an inner surface for passing condensed reagent to the first opening. Since the projection is laterally offset from the connection of the connecting tube in the collector tube, condensed reagent cannot fall back directly into the connecting tube. Instead the projection is arranged so that the steam products will travel with the flow in the collector tube from the connecting tube to the projection. Moreover the collector tube is provided with an inner surface which can return condensed reagent from the projection to the connecting tube. The inner surface of the collector tube could be inclined so that condensed reagent flows along the surface towards the first opening.

The collecting means may further comprise a variable temperature control element which is arranged in thermal contact with the projection for controlling a temperature of the condensing surface to vary the degree of condensation of reagent. The temperature of the condensing surface controls how efficiently the reagent will be condensed on the surface. By the temperature of the condensing surface being regulated, control of the condensation of reagent will be ensured. For instance, the condensing surface could be heated during a first part of the combustion process when essentially no reagent has been evaporated and when water vapour is drawn off from the process. Then the condensing surface could be cooled to achieve an efficient condensation during the latter part of the combustion process.

The projection can be conical. The projection can then be arranged to taper towards the first opening of the connecting tube and, thus, direct condensed reagent to fall back into the connecting tube.

Alternatively the projection can be cylindrical. This means that a larger condensing surface can be obtained. It will be appreciated that many other shapes of the projection are conceivable. For example, the projection could be tubular.

The collecting device may comprise a plurality of connecting tubes which each are arranged to be inserted into a test tube and a corresponding plurality of projections, which each are associated with one of the plurality of connecting tubes, a projection being associated with each connecting tube. This means that the collecting device can be used to draw off undesirable fumes and recover reagent for wet combustion processes in a plurality of test tubes at the same time.

The connecting tube and the collector tube can be formed in one piece. This means that there is no risk of fumes leaking between the connecting tube and the collector tube.

The collecting device may comprise a washer which is arranged around the connecting tube to seal between the connecting tube and the test tube. When the connecting tube is inserted into the test tube, the washer can thus abut against the opening of the test tube, which prevents fumes from the wet combustion from leaking to the ambient atmosphere.

The collecting device may further comprise means for providing a good seal between the washer and the test tube. For instance, an interior core of the washer could be made of a heavy material, such as lead, which would imply that the washer is pressed against the test tube by gravity. Alternatively, a spring could be arranged between the outside of the collector tube and the washer to press the washer against the test tube to provide a good seal. This means that leakage of fumes can be prevented even if violent reactions occur in the wet combustion, which cause sudden pressure increases in the test tube.

The washer underside, which comes into contact with the test tube, is preferably conical so that the washer tapers radially away from the connecting tube. This means that the washer can fit more tightly against the test tube and that reagent condensing on the underside of the washer will flow along the underside of the washer to a central part of the test tube. There is thus a minimal risk that condensed reagent reaches the outside of the test tube.

### Brief Description of the Drawings

The invention will now be described in more detail by way of example and with reference to the accompanying drawings.
Fig. 1 is a perspective view of a collecting device in a first embodiment of the invention.
Fig. 2 is a longitudinal section along line II-II of the collecting device in Fig. 1, where the collecting device has been inserted into a test tube.
Fig. 3 is a cross-section along line III-III of the collecting device in Fig. 1.
Fig. 4 is a longitudinal section corresponding to Fig. 2 of a collecting device in a second embodiment of the invention.
Fig. 5 is a longitudinal section corresponding to Fig. 2 of a collecting device in a third embodiment of the invention.
Fig. 6 is a longitudinal section corresponding to Fig. 2 of a collecting device in a fourth embodiment of the invention.
Fig. 7 is a longitudinal section corresponding to Fig. 2 of a collecting device in a fifth embodiment of the invention.
Fig. 8 is a longitudinal section corresponding to Fig. 2 of a collecting device in a sixth embodiment of the invention.

### Description of Preferred Embodiments of the Invention

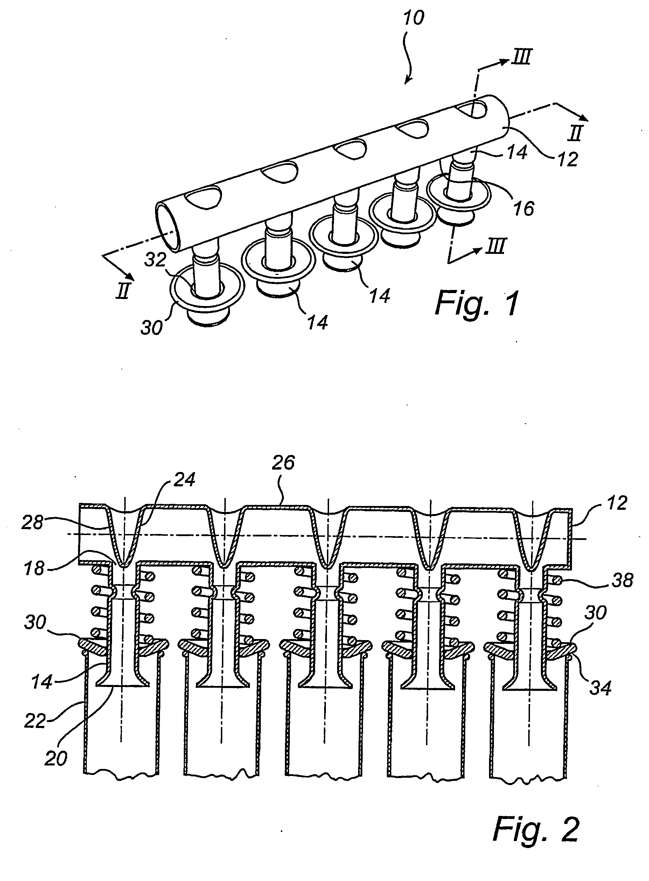

A collecting device 10 in a first embodiment of the invention will now be described with reference to Figs 1-3. The collecting device 10 has at least one collector tube 12, in which undesirable fumes from a process in a test tube are to be collected and drawn off. Connecting tubes 14 are connected to a lower part 16 of the collector tube 12. The connecting tubes 14 are arranged to be inserted into test tubes and pass fumes from the test tube into the collector tube 12.

As is evident from Fig. 2, the connecting tube 14 has a first opening 18 connecting the connecting tube 14 to the collector tube 12 and a second opening 20 which is inserted into a test tube 22. The collector tube 12 has a projection 24 in connection with each connecting tube 14. The projections 24 extend from an upper part 26 in the interior of the collector tube 12 and have an extra condensing surface 28 in addition to the walls of the connecting tube 14. Evaporated reagent from the test tube 22 can condense on the extra condensing surface 28 and be returned to the test tube 22. Due to the projection 24 of the collector tube 12, there is a relatively large surface on which condensing can occur. The condensing surface 28 extends towards the first opening 18 of the connecting tube 14 so that condensate will fall from the condensing surface 28 back into the connecting tube 14 and further down in the test tube 22. The condensing surface 28 can even extend partly into the connecting tube 14, which additionally ensures that condensate will fall back into the connecting tube 14. The projection 24 is conical so that condensate will flow along the projection 24 and be directed down through the first opening 18 of the connecting tube 14.

The collecting device 10 further comprises a washer 30 which is arranged around the connecting tube 14. The washer 30 has a central hole 32 for receiving the connecting tube 14. When the connecting tube 14 is inserted into a test tube 22, the washer 30 abuts against the test tube 22 so that its opening is sealed. The washer 30 has a lower conical surface 34 which abuts against an upper edge of the test tube 22. The lower conical surface 34 of the washer makes the washer 30 extend partly into the test tube 22 and thus fit more closely against the test tube 22. Furthermore condensate on the washer 30 is prevented from flowing out on the outside of the test tube 22 by the condensate being passed via the conical surface 34 of the washer to the centre of the test tube 22. The collecting device 10 can have a spring 38 which extends between the underside of the collector tube 12 and the washer 30. The spring 38 presses the washer 30 against the test tube 22 for further sealing of the connection between the collecting device 10 and the test tube 22. Furthermore a gas flow occurs in the collector tube 12, which causes evacuation of gas from the test tube 22 through the connecting tube 14. This evacuation also causes a pressure difference between the lower and upper side of the washer 30, which additionally presses the washer 30 against the test tube 22.

The lower part of the connecting tube 14 is shaped as a funnel. This means that the washer 30 will abut against a part of the connecting tube 14 which widens, thus making it possible for the central hole 32 of the washer 30 to fit against the connecting tube 14 and preventing the washer 30 from falling off the connecting tube 14. The washer 30 can be formed in two parts which are snapped together around the connecting tube 14 in manufacture. The evacuation from the test tube 22 through the connecting tube 14 also prevents leakage from the test tube 22 between the connecting tube 14 and the washer 30. A possible gas flow between the connecting tube 14 and the washer 30 would instead introduce ambient atmosphere into the test tube 22.

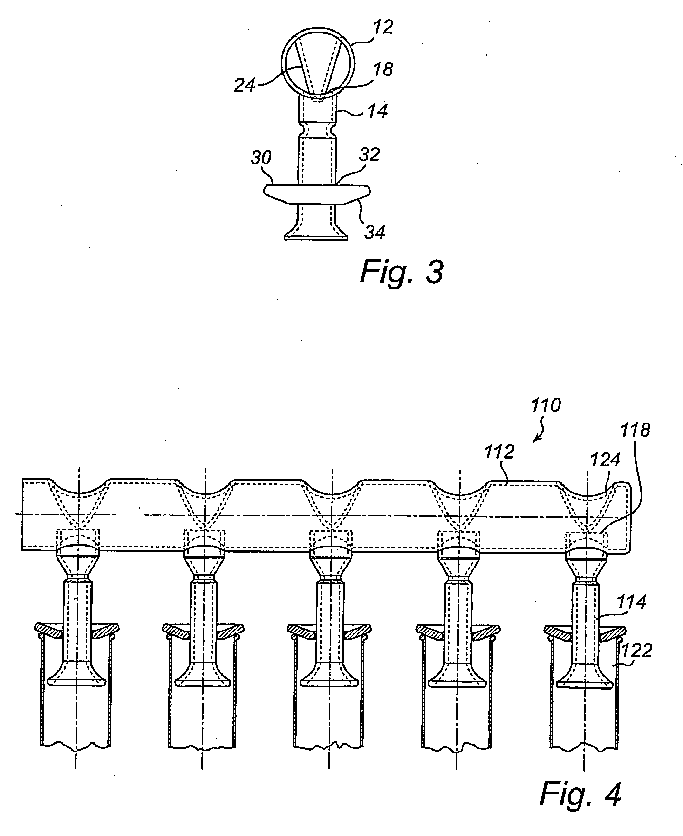

The gas flow occurs in the longitudinal direction of the collector tube 12. This gas flow takes up undesirable fumes from the processes in the test tubes 22 and entrains them. The collector tube 12 can be connected to a pump (not shown) to produce and control the gas flow in the collector tube 12. The collector tube 12 can also be connected to a cleaning device (not shown), such as a scrubber, for taking care of drawn-off gases. As is evident from Fig. 3, there is a space for the gas flow in the collector tube 12 past a projection 24 at the side of the projection 24 and above the first opening 18 of the connecting tube 14.

The collector tube 12, the connecting tubes 14 and the projections 18 are preferably integrally formed of, for instance, glass. This is achieved by blowing glass to the desired shape. Glass is a suitable material since it withstands being subjected to high temperatures and demanding chemical environments without changing its shape. The collector tube 12, the connecting tubes 14 and the projections 18 could alternatively be made of PTFE or Teflon^{®}, an enamelled material, a ceramic or a stainless steel tube coated with PTFE. The washer 30 is also suitably made of glass, ceramic material, PTFE or some other thermosetting plastic.

A second embodiment of the collecting device 110 will now be described with reference to Fig. 4. In this embodiment, the connecting tube 114 is arranged so as to extend partly into the collector tube 112. The first opening 118 of the connecting tube 114 is thus arranged above a lower surface of the collector tube 112. Condensate on the bottom of the collector tube 112 then cannot enter the connecting tube 114 and fall down into the test tube 122. This means that crosstalk between test tubes is prevented, that is fumes from a test tube are, after condensation, prevented from falling down in another test tube. Fumes condensed in the collector tube 112 on other surfaces than the condensing surfaces 128 of the projections 124 can reach the bottom of the collector tube 112, but thus not be returned to test tubes 122. Crosstalk is also prevented by overboil from the test tube 122, which has boiled over from the first opening of the connecting tube 114 and in this way reached the collector tube 112, not being able to be returned to test tubes 122.

The arrangement of the first opening 118 inside the collector tube 112 also means that liquid accumulation of condensed reagent can be produced around that part of the connecting tube 114 which extends into the collector tube 112. The liquid accumulation has a temperature which is below the dew point of the reagent, which means that evaporated reagent, once it has entered the collector tube 112, encounters a sufficiently low temperature to be condensed. This stimulates condensation of evaporated reagent and return of the reagent to the process in the test tube 122.

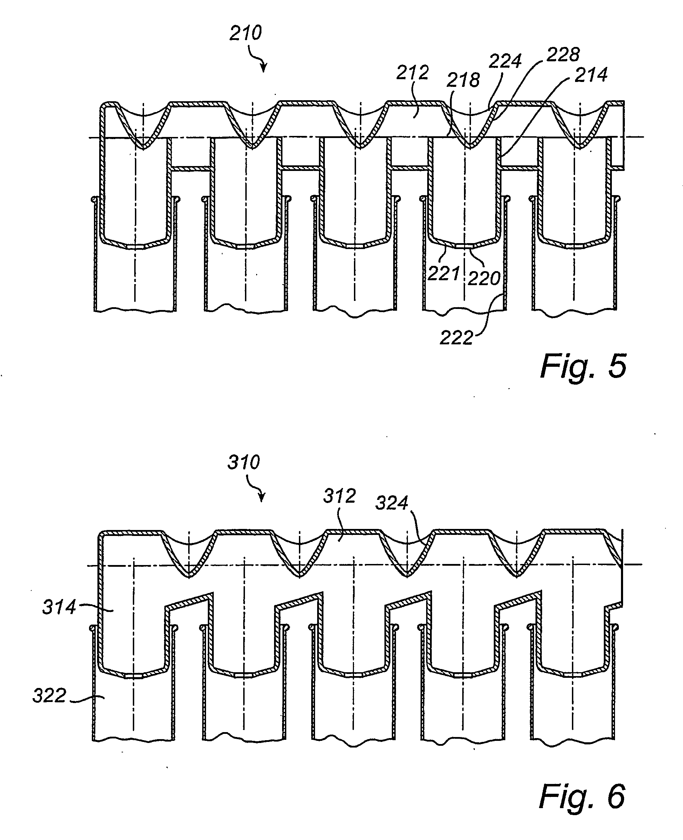

A third embodiment of the collecting device 210 will now be described with reference to Fig. 5. The projections 224 are now slightly offset above the connecting tubes 214. The projections 224 are offset in the direction in which gas flows through the collector tube 212. This means that evaporated reagent entering the collector tube 212 through the connecting tube 214 is more likely to hit the condensing surface 228 of the projection 214 even if there is a vigorous gas flow in the collector tube 212.

The collecting device 210 has a cylindrical connecting tube 214 with a radius essentially corresponding to the radius of the test tube 222. The second opening 220 of the connecting tube 214 has a substantially smaller radius than the connecting tube 214 and is therefore arranged in an end wall 221 of the connecting tube 214. This means that the evacuation in the collector tube 212 can still produce sufficient evacuation from the test tube 222 to prevent leakage of fumes from the test tube 222 between the test tube 222 and the connecting tube 214.

A fourth embodiment of the collecting device 310 will now be described with reference to Fig. 6. The projections 324 are now offset relative to the connecting tubes 314 in the direction in which gas flows through the collector tube 312. The projection 324 is thus not arranged above the respective connecting tubes 314. The gas flow in the collector tube 312 will ensure that evaporated reagent coming up from a connecting tube 314 is passed through the collector tube 312 to the projection 324 which is associated with the connecting tube 314. The reagent is condensed on this projection 324 and will then fall to the bottom of the collector tube 312. The bottom of the collector tube 312 is inclined towards the connecting tube 314 in the direction opposite to the direction in which gas flows in the collector tube 312. This means that condensed reagent will flow along the bottom back to the connecting tube 314 and be returned to the process.

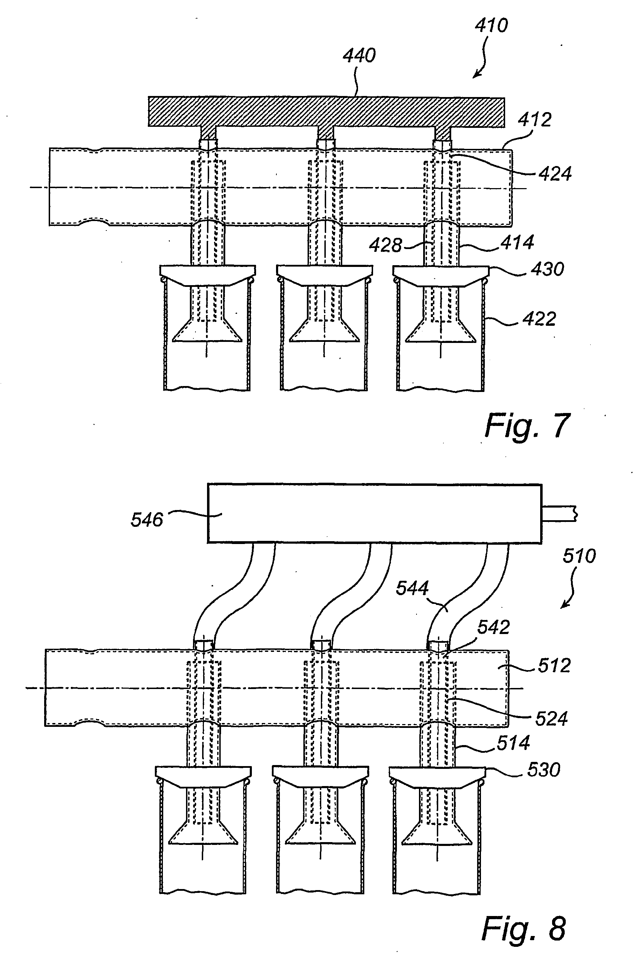

A fifth embodiment of the collecting device 410 will now be described with reference to Fig. 7. The projection 424 is now cylindrical and extends into the connecting tube 414 along a large part of the connecting tube 414. Similarly to the collecting device 10 in the first embodiment, the connecting tube 414 has the shape of a funnel and the connecting tube 414 is surrounded by a washer 430 which is arranged to seal against the opening of the test tube 422. The projection 424 can fill a large part of the radius of the connecting tube 414. This means that a very large condensing surface 428 is obtained and, thus, effective condensation of evaporated reagent can be ensured.

In this fifth embodiment, also a variable temperature control element 440 is shown, which is arranged on the outside of the collector tube 412 and extends into a tubular shape of the projections from the outside of the collector tube 412. The variable temperature control element 440 can be controlled to heat or cool the projections 424 so as to control the temperature thereof. In this way the degree of condensation of fumes from the test tube 422 can be controlled.

It will be appreciated that a temperature control element can also be combined with any one of the previously described embodiments.

The temperature control element can be provided, for instance, as a Peltier element, which can easily be switched between cooling and heating by shifting current direction through the element. The Peltier element can be coated with a material of high thermal conductivity, for instance a silicone paste for efficient transfer of heat between the Peltier element and the projections 424.

A sixth embodiment of the collecting device 510 will now be described with reference to Fig. 8. The projection 524 now contains a duct 542 which is open directly to the ambient atmosphere or connected to the atmosphere via a tube 544 and an air conditioning device 546, which may comprise, for instance, elements for heating or cooling the air, filters for filtering the air and a pump. Since a gas flow occurs through the collector tube 512, air from the ambient atmosphere will be drawn into the collector tube 512. This produces an inflow of cold air through the duct 542, which will cool the projection 524 and thus increase the degree of condensation on the condensing surface of the projection 524. Alternatively cold air can be pumped into the duct 542 through the tube 544. The projection 524 is now narrower than in the fifth embodiment, which facilitates cooling of the projection 524 by the ambient atmosphere.

Use of the collecting device will now be described for preprocessing of a sample for Kjeldahl analysis, in which wet combustion of the sample occurs in concentrated sulphuric acid. However, it will be appreciated that the collecting device can also be used for other processes, in which wet combustion occurs. The collecting device can be used in evaporation or concentration of substances in a test tube, in particular in connection with boiling of a sample in sulphuric acid, such as in concentration of hydroxyproline for estimation of the collagen content of meat or in estimation of chemical oxygen consumption in a water sample.

In preprocessing of a sample for Kjeldahl analysis, the sample is split by wet combustion in boiling concentrated sulphuric acid with a catalyst added, for instance mercury, copper, selenium or titanium and a salt, such as potassium sulphate. The salt increases the boiling point of the sulphuric acid, which accelerates the splitting process and ensures that the sample can be split. Splitting requires a temperature of 370-400°C.

Wet combustion occurs in a test tube. A plurality of test tubes are arranged in a heating block for heating of the test tubes. A collecting device 10 according to the invention is arranged on the test tubes. The collecting device 10 can be arranged so that connecting tubes 14 extend down into a plurality of test tubes. Due to the compact design of the collecting device 10 with projections 24 which provide a condensing surface 28, the collecting device 10 can be arranged on the test tubes so that the entire system is accommodated in small fume cupboards.

When heating the samples in the test tubes, first water will be evaporated from the samples. This occurs before the sulphuric acid can start boiling. At this stage, effective evacuation can be arranged in the collector tube so that the water vapour is drawn off. There is no risk of sulphuric acid being drawn off since the sulphuric acid has a much higher boiling point than water. It is then desirable for the water vapour not to condense and return to the combustion process. The projections 24 or air introduced into a duct 542 through the projections 24 can be heated during this period of the process so as to additionally prevent condensation of water vapour on the projections.

After heating for a while, usually about 10 minutes, all the water in the sample has evaporated. As a rule it then takes about 5 more minutes before the samples have been sufficiently heated for the sulphuric acid to boil. There is thus plenty of time to switch the temperature control of the projections from heating to cooling. Moreover the evacuation in the collector tube 12 is lowered to a low level so that evaporated sulphuric acid should not be entrained in a moderate gas flow.

When the sample has been heated to about 370-400°C, the wet combustion process starts. During this process the sample in the sulphuric acid boils. Nasty-smelling fumes of sulphuric acid are collected and removed in the collector tube 12. Evaporated sulphuric acid is condensed on the projections 28 and returned to the same test tube 22, as described above. This process normally proceeds for about 60 minutes, after which the preprocessing of the sample is completed. The collecting device 10 can now be removed from the test tubes 22 and the sample in the test tubes 22 is, after cooling, prepared to be analysed according to the Kjeldahl method.

It will be appreciated that a large number of modifications of the above-described embodiments of the invention are conceivable within the scope of the invention as defined by the appended claims.

## Claims

1. A collecting device (10;110;210;410;510) to be connected to at least one test tube (22;122;222;422) in which a sample is subjected to a wet combustion process, said collecting device (10;110;210;410;510) comprising a collector tube (12;112;212;412;512) which is arranged to collect and draw off from the test tube (22;122;222;422) steam products from the wet combustion process, and a. plurality of connecting tubes (14;114;214;414;514) each of which has a first opening (18;118;218) and a second opening (20;220) which is adapted to be inserted into a test tube (22;222), **characterised in that** the first opening (18;118;218) is connecting the connecting tube (14;114:214;414;514) to the collector tube (12;112;212;412;512) and **in that** the collector tube (12;112;212;412;512) comprises a corresponding plurality of projections (24;124;224;424;524), each being associated with its own one of the plurality of connecting tubes (14;114;214;414;514), and each of which extends from a portion of an inner side wall of the collector tube (12;112;412;512), which portion is positioned opposite to a connection of the first opening (18;118;218) of the connecting tube (14;114;214;414;514) to the collector tube (12;112;212;412;512), into the interior of the collector tube (12;112:212;412;512) to have a condensing surface (28;228) for condensation of reagent in the steam products.

2. A collecting device (510) as claimed in claim 1 in which each projection (524) comprises an inner duct (542) having an opening which communicates with the ambient atmosphere.

3. A collecting device (110;210;410;510) as claimed in claim 1 in which each projection (124;224;424;524) extends at least partly into the connecting tube (114;214;414;514).

4. A collecting device (110;210;410;510) as claimed in any one of the preceding claims in which each connecting tube (114;214;4114;514) and the collector tube (112;212;412;512) are arranged relative to each other so that the first opening of each connecting tube (114;214;414;514) is arranged in a position inside the collector tube (112;212;4,12;512).

5. A collecting device (310) to be connected to at least one test tube (322) in which a sample is subjected to a wet combustion process, said collecting device (310) comprising a collector tube (312) which is arranged to collect and draw off from the test tube (322) steam products from the wet combustion process, and a plurality of connecting tubes (314) each of which has a first opening and a second opening which is adapted to be inserted into a test tube (322), charac terised in that the first opening is connecting the connecting tube (314) to the collector tube (312) and in that the collector tube (312) comprises a corresponding plurality of projections (324), each being associated with its own one of the plurality of connecting tubes (314), each of which extends into the interior of the collector tube (312) to have a condensing surface for condensation of reagent in the steam products and each of which laterally offset relative to the positions of the first opening of the associated connecting tube (314) in the collector tube (312) in a direction in which steam products flow in the collector tube (312); and in that the collector tube (312) is provided with an inner surface for passing condensed reagent to the first opening.

6. A collecting device (410) as claimed in any one of the preceding claims further comprising a variable temperature control element (440) which is arranged in thermal contact with the projections (424) for controlling a temperature of the condensing surfaces (428) to vary the degree of condensation of reagent.

7. A collecting device (410; 510) as claimed in any one of the preceding claims in which each projection (424;524) is cylindrical.

8. A collecting device (10;110;410;510) as claimed in any one of the preceding claims further comprising a washer (30;430;530) which is arranged around each connecting tube (14;114;414;514) to seal between the connecting tube (14;114;414;514) and the test tube (22;122;422).

## Patentansprüche

1. Eine Sammelvorrichtung (10; 110; 210; 410; 510), die mit mindestens einem Reagenzgerät (22; 122; 222; 422) verbunden werden soll, in dem eine Probe einem Nassverbrennungsvorgang ausgesetzt wird, wobei die Sammelvorrichtung (10; 110; 210; 410; 510) ein Sammlergerät (12; 112; 212; 412; 512), das eingerichtet ist, um Dampfprodukte aus dem Nassverbrennungsvorgang zu sammeln und aus dem Reagenzgerät (22; 122; 222; 422) abzuziehen, und eine Vielzahl von Verbindungsgeräten (14; 114; 214; 414; 514), von denen jedes eine erste Öffnung (18; 118; 218) und eine zweite Öffnung (20; 220), die angepasst ist, um in ein Reagenzgerät (22; 222) eingeführt zu werden, aufweist, beinhaltet, **dadurch gekennzeichnet, dass** die erste Öffnung (18; 118; 218) das Verbindungsgerät (14; 114; 214; 414; 514) mit dem Sammlergerät (12; 112; 212; 412; 512) verbindet und dass das Sammlergerät (12; 112; 212; 412; 512) eine entsprechende Vielzahl von Vorsprüngen (24; 124; 224; 424; 524) beinhaltet, die jeweils zu ihrem eigenen von der Vielzahl von Verbindungsgeräten (14; 114; 214; 414; 514) zugehörig sind und von denen sich jeder von einem Abschnitt einer Innenseitenwand des Sammlergerätes (12; 112; 412; 512) in das Innere des Sammlergerätes (12; 112; 212; 412; 512) erstreckt, um eine Kondensationsfläche (28; 228) zur Kondensation von Reagens in den Dampfprodukten aufzuweisen, wobei der Abschnitt gegenüber einer Verbindung der ersten Öffnung (18; 118; 218) des Verbindungsgerätes (14; 114; 214; 414; 514) mit dem Sammlergerät (12; 112; 212; 412; 512) positioniert ist.

2. Sammelvorrichtung (510) gemäß Anspruch 1, wobei jeder Vorsprung (524) einen Innenkanal (542) mit einer Öffnung in Kommunikation mit der Umgebungstemperatur beinhaltet.

3. Sammelvorrichtung (110; 210; 410; 510) gemäß Anspruch 1, wobei sich jeder Vorsprung (124; 224; 424; 524) mindestens teilweise in das Verbindungsgerät (114; 214; 414; 514) erstreckt.

4. Sammelvorrichtung (110; 210; 410; 510) gemäß einem der vorhergehenden Ansprüche, wobei jedes Verbindungsgerät (114; 214; 414; 514) und das Sammlergerät (112; 212; 412; 512) relativ zueinander so eingerichtet sind, dass die erste Öffnung jedes Verbindungsgerätes (114; 214; 414; 514) in einer Position innerhalb des Sammlergerätes (112; 212; 412; 512) eingerichtet ist.

5. Eine Sammelvorrichtung (310), die mit mindestens einem Reagenzgerät (322) verbunden werden soll, in dem eine Probe einem Nassverbrennungsvorgang ausgesetzt wird, wobei die Sammelvorrichtung (310) ein Sammlergerät (312), das eingerichtet ist, um Dampfprodukte aus dem Nassverbrennungsvorgang zu sammeln und aus dem Reagenzgerät (322) abzuziehen, und eine Vielzahl von Verbindungsgeräten (314), von denen jedes eine erste Öffnung und eine zweite Öffnung, die angepasst ist, um in ein Reagenzgerät (322) eingeführt zu werden, aufweist, beinhaltet, **dadurch gekennzeichnet, dass** die erste Öffnung das Verbindungsgerät (314) mit dem Sammlergerät (312) verbindet und dass das Sammlergerät (312) eine entsprechende Vielzahl von Vorsprüngen (324) beinhaltet, die jeweils zu ihrem eigenen von der Vielzahl von Verbindungsgeräten (314) zugehörig sind, von denen sich jeder in das Innere des Sammlergerätes (312) erstreckt, um eine Kondensationsfläche zur Kondensation von Reagens in den Dampfprodukten aufzuweisen, und von denen jeder in einer Richtung, in der Dampfprodukte in dem Sammlergerät (312) strömen, relativ zu den Positionen der ersten Öffnung des zugehörigen Verbindungsgerätes (314) in das Sammlergerät (312) lateral versetzt ist; und dass das Sammlergerät (312) mit einer Innenfläche zum Führen von kondensiertem Reagens zu der ersten Öffnung versehen ist.

6. Sammelvorrichtung (410) gemäß einem der vorhergehenden Ansprüche, die ferner ein Element (440) zur variablen Temperaturregelung beinhaltet, das in thermischem Kontakt mit den Vorsprüngen (424) eingerichtet ist, um eine Temperatur der Kondensationsflächen (428) zu regeln, um den Reagenskondensationsgrad zu variieren.

7. Sammelvorrichtung (410; 510) gemäß einem der vorhergehenden Ansprüche, wobei jeder Vorsprung (424; 524) zylinderförmig ist.

8. Sammelvorrichtung (10; 110; 410; 510) gemäß einem der vorhergehenden Ansprüche, die ferner einen Dichtungsring (30; 430; 530) beinhaltet, der um jedes Verbindungsgerät (14; 114; 414; 514) eingerichtet ist, um zwischen dem Verbindungsgerät (14; 114; 414; 514) und dem Reagenzgerät (22; 122; 422) abzudichten.

## Revendications

1. Un dispositif de collecte (10 ; 110 ; 210 ; 410 ; 510) à raccorder à au moins un tube à essai (22 ; 122 ; 222 ; 422) dans lequel un échantillon est soumis à un processus de combustion humide, ledit dispositif de collecte (10 ; 110 ; 210 ; 410 ; 510) comprenant un tube collecteur (12 ; 112 ; 212 ; 412 ; 512) qui est arrangé pour collecter et soutirer du tube à essai (22 ; 122 ; 222 ; 422) des produits de vapeur provenant du processus de combustion humide, et une pluralité de tubes de raccordement (14 ; 114 ; 214 ; 414 ; 514), lesquels possèdent chacun une première ouverture (18 ; 118 ; 218) et une deuxième ouverture (20 ; 220) qui est adaptée pour être insérée dans un tube à essai (22 ; 222), **caractérisé en ce que** la première ouverture (18 ; 118 ; 218) raccorde le tube de raccordement (14 ; 114 ; 214 ; 414 ; 514) au tube collecteur (12 ; 112 ; 212 ; 412 ; 512) et **en ce que** le tube collecteur (12 ; 112 ; 212 ; 412 ; 512) comprend une pluralité correspondante de projections (24 ; 124 ; 224 ; 424 ; 524) qui sont chacune associées avec leur propre tube de raccordement parmi la pluralité de tubes de raccordement (14 ; 114 ; 214 ; 414 ; 514) et qui s'étendent chacune à partir d'une portion d'une paroi latérale interne du tube collecteur (12 ; 112 ; 412 ; 512), laquelle portion est positionnée face à un raccordement de la première ouverture (18 ; 118 ; 218) du tube de raccordement (14; 114; 214; 414; 514) au tube collecteur (12 ; 112 ; 212 ; 412 ; 512), dans l'intérieur du tube collecteur (12 ; 112 ; 212 ; 412 ; 512) pour présenter une surface de condensation (28 ; 228) destinée à la condensation de réactif dans les produits de vapeur.

2. Un dispositif de collecte (510) tel que revendiqué dans la revendication 1 dans lequel chaque projection (524) comprend un conduit interne (542) possédant une ouverture qui communique avec l'atmosphère ambiante.

3. Un dispositif de collecte (110 ; 210 ; 410 ; 510) tel que revendiqué dans la revendication 1 dans lequel chaque projection (124 ; 224 ; 424 ; 524) s'étend au moins en partie dans le tube de raccordement (114 ; 214 ; 414 ; 514).

4. Un dispositif de collecte (110 ; 210 ; 410 ; 510) tel que revendiqué dans n'importe laquelle des revendications précédentes dans lequel chaque tube de raccordement (114 ; 214 ; 414 ; 514) et le tube collecteur (112 ; 212 ; 412 ; 512) sont arrangés l'un par rapport à l'autre de sorte que la première ouverture de chaque tube de raccordement (114 ; 214 ; 414 ; 514) soit arrangée dans une position à l'intérieur du tube collecteur (112 ; 212 ; 412 ; 512).

5. Un dispositif de collecte (310) à raccorder à au moins un tube à essai (322) dans lequel un échantillon est soumis à un processus de combustion humide, ledit dispositif de collecte (310) comprenant un tube collecteur (312) qui est arrangé pour collecter et soutirer du tube à essai (322) des produits de vapeur provenant du processus de combustion humide, et une pluralité de tubes de raccordement (314), lesquels possèdent chacun une première ouverture et une deuxième ouverture qui est adaptée pour être insérée dans un tube à essai (322), **caractérisé en ce que** la première ouverture raccorde le tube de raccordement (314) au tube collecteur (312) et **en ce que** le tube collecteur (312) comprend une pluralité correspondante de projections (324) qui sont chacune associées avec leur propre tube de raccordement parmi la pluralité de tubes de raccordement (314), qui s'étendent chacune dans l'intérieur du tube collecteur (312) pour présenter une surface de condensation destinée à la condensation de réactif dans les produits de vapeur et qui sont chacune décalées latéralement par rapport aux positions de la première ouverture du tube de raccordement associé (314) dans le tube collecteur (312) dans une direction dans laquelle des produits de vapeur s'écoulent dans le tube collecteur (312) ; et **en ce que** le tube collecteur (312) est pourvu d'une surface interne destinée à passer le réactif condensé à la première ouverture.

6. Un dispositif de collecte (410) tel que revendiqué dans n'importe laquelle des revendications précédentes comprenant en outre un élément de contrôle de température variable (440) qui est arrangé en contact thermique avec les projections (424) pour contrôler une température des surfaces de condensation (428) afin de faire varier le degré de condensation de réactif.

7. Un dispositif de collecte (410 ; 510) tel que revendiqué dans n'importe laquelle des revendications précédentes dans lequel chaque projection (424 ; 524) est cylindrique.

8. Un dispositif de collecte (10 ; 110 ; 410 ; 510) tel que revendiqué dans n'importe laquelle des revendications précédentes comprenant de plus une rondelle (30 ; 430 ; 530) qui est arrangée autour de chaque tube de raccordement, (14 ; 114 ; 414 ; 514) pour assurer l'étanchéité entre le tube de raccordement (14 ; 114 ; 414 ; 514) et le tube à essai (22 ; 122 ; 422).
